(19) Europäisches Patentamt
European Patent Office
Office européen des brevets

(11) Publication number: 0 001 267
B1

# (12) EUROPEAN PATENT SPECIFICATION

(45) Veröffentlichungstag der Patentschrift: **16.09.81**

(51) Int. Cl.³: **C 08 L 67/02**, C 08 J 3/20

(21) Anmeldenummer: **78100903.0**

(22) Anmeldetag: **15.09.78**

## (54) Verfahren zum Färben linearer Polyester in der Masse.

(30) Priorität: **23.09.77 CH 11652/77**

(43) Veröffentlichungstag der Anmeldung:
**04.04.79 Patentblatt 79/7**

(45) Bekanntmachung des Hinweises auf die Patenterteilung:
**16.09.81 Patentblatt 81/37**

(84) Benannte Vertragsstaaten:
**CH DE FR GB NL**

(56) Entgegenhaltungen:
**DE - A - 2 401 981**
**FR - A - 2 359 177**
**GB - A - 651 694**
**GB - A - 1 424 209**
**US - A - 3 009 913**

(73) Patentinhaber: **CIBA-GEIGY AG**
**Patentabteilung Postfach**
**CH-4002 Basel (CH)**

(72) Erfinder: **Bäbler, Fridolin, Dr.**
**Nussbaumweg 19**
**CH-4123 Allschwil (CH)**

**EP 0 001 267 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Verfahren zum Färben linearer Polyester in der Masse

Es wurde gefunden, dass man unerwartet brillante, farbstarke und hochlichtechte Färbungen in linearen Polyestern in der Masse gefärbt erhält, wenn man als Färbemittel eine Mischung verwendet, bestehend aus 0,05—0,35 Gew.-%, vorzugsweise 0,10—0,25 Gew.-%, bezogen auf die Polyestermenge eines Thioindigo- und/oder Dioxazinpigmentes und einem oder mehreren davon verschiedenen polymerlöslichen Farbstoffen.

Der Begriff Thioindigopigment umfasst sowohl die durch Behandlung von Hydroxythionaphthen mit Oxydationsmitteln oder durch Kondensation eines Hydroxythionaphthens mit einem reaktionsfähigen Derivat davon erhältlichen Thioindigofarbstoffe als auch die durch Kondensation eines Hydroxythionaphthens mit einem Isatin erhältlichen Thioindigoidpigmente.

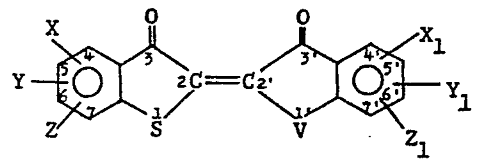

(I)

worin V ein S-Atom oder eine —NH-Gruppe, X und $X_1$ H-oder Halogenatome, Alkyl- oder Alkoxygruppen mit 1—4 C-Atomen, Alkysulfonylgruppen mit 1—4 C-Atomen oder eine gegebenenfalls durch Halogenatome, Alkyl- oder Alkoxygruppen mit 1—4 C-Atomen substituierte Phenoxy- oder Phenylsulfonylgruppe, Y, $Y_1$, Z und $Z_1$ H- oder Halogenatome oder Methylgruppen bedeuten, oder worin X und Y bzw. $X_1$ und $Y_1$ einen ankondensierten Benzolkern bilden, der beispielsweise durch Halogenatome, Alkyl- oder Alkoxygruppen mit 1—4 C-Atomen substituiert sein kann.

Als Beispiele seien genannt:

Thioindigo
6,6′-Dichlorthioindigo
7,7′-Dichlorthioindigo
5,5′-Dibromthioindigo
4,4′,7,7′-Tetrachlorthioindigo
6,6′-Dimethoxythioindigo
5,6′-Dimethoxythioindigo
6,6′-Diäthoxythioindigo
6,6′-Dichlor-4,4′-dimethylthioindigo
5,5′-Dichlor-4,4′-7,7′-tetramethylthioindigo
6-Chlor-4-methyl-6′-methoxythioindigo
5,6′,7-Trichlor-4,4′-dimethylthioindigo
5- oder 7-Phenylsulfonyl-6,6′-dichlor-4,4′-dimethylthioindigo
7-Chlor-5,6-benzthioindigo
6-Chlor-5-methoxy-7′-chlor-5′,6′-benzthioindigo
7-Methyl-5,6-benzthioindigo
sowie die Thioindigoide der Formeln

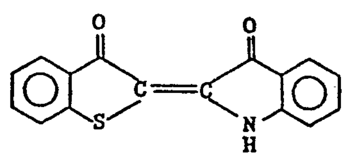

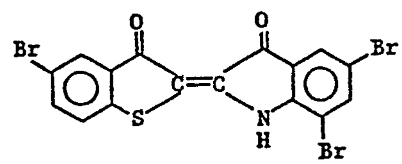

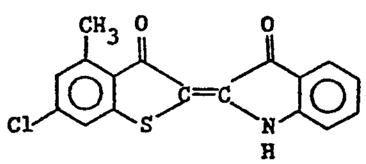

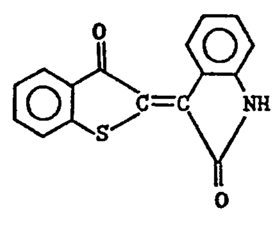

Als Dioxazinpigmente kommen vorzugsweise die Triphendioxazine der Formel

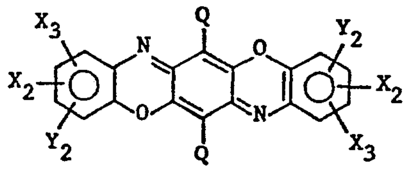

(II)

in Betracht, worin die Q Chlor- oder Bromatome, gegebenenfalls durch Halogenatome, Alkyl- oder Alkoxygruppen mit 1—4 C-Atomen substituierte Phenoxy-, Phenylmercapto- oder Benzoylgruppen oder Alkoxycarbonylgruppen mit 2—5 C-Atomen, die $Y_2$ Alkoxygruppen mit 1—12 C-Atomen, Cycloalkoxygruppen mit 5 oder 6 C-Atomen, Hydroxyalkoxygruppen mit 2—6 C-Atomen, Alkoxyalkoxy- oder Alkanoyloxyalkoxygruppen mit 3—8 C-Atomen, Phenoxygruppen, Phenoxy - ($C_2$—$C_6$) - alkoxy- oder Benzoyloxy - ($C_2$—$C_6$) - alkoxygruppen, wobei die drei letztgenannten in den Phenylresten Halogenatome, Alkyl- oder Alkoxygruppen aufweisen können, Naphthoxy- oder Tetrahydronaphthoxygruppen, Naphthoxy - ($C_2$—$C_6$) - alkoxy- oder Tetrahydronaphthoxy - ($C_2$—$C_6$) - alkoxygruppen, die $X_2$ die Bedeutung von $Y_2$ haben und zusätzlich noch H- oder Halogenatome, Alkanoylaminogruppen mit 2—6 C-Atomen, gegebenenfalls durch Halogenatome, Alkyl- oder Alkoxygruppen mit 1—6 C-Atomen substituierte Benzoylaminogruppen, Trifluormethylgruppen, Alkylsulfonylgruppen mit 1—6 C-Atomen, Phenyl-, Benzoyl- oder Phenylmercaptogruppen darstellen können, die $X_3$ H- oder Halogenatome bedeuten, oder worin die Reste $X_2$ und $X_3$ einen ankondensierten Benzolring bilden.

Bevorzugt sind Dioxazine der Formel

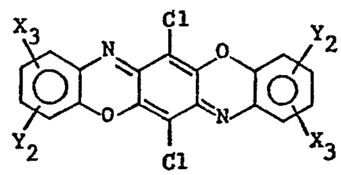

(III)

worin $X_3$ und $Y_2$ die oben angegebene Bedeutung haben.

Die $Y_2$ befinden sich vorzugsweise in m-Stellung zum Sauerstoff- oder Stickstoffatom des Oxazinringes.

Als Beispiele von Alkoxygruppen seien Methoxy-, Aethoxy-, Propoxy-, Isopropoxy-, Butoxy-, Isobutoxy-, tert. Butoxy-, Amyloxy-, Hexyloxy-, Octyloxy-, Decyloxy- oder Dodecyloxygruppen genannt. Als Beispiele von Hydroxyalkoxygruppen seien $\beta$-Hydroxyäthoxy-, $\gamma$-Hydroxypropoxy- oder $\delta$-Hydroxybutoxygruppen genannt. Aus den Reihen der Alkoxyalkoxygruppen seien die $\beta$-Methoxyäthoxy-, die $\beta$-Aethoxyäthoxy- oder die $\beta$-Hydroxyäthoxyäthoxygruppen gennant. Als Acyloxyalkoxygruppen seien $\beta$-Acetoxyäthoxy-, $\beta$-Propoxyäthoxy-, $\beta$-Isopropoxyäthoxy- oder $\beta$-Benzoyloxyäthoxygruppen erwähnt. Als Vertreter einer Aryloxyalkoxygruppe sei die $\beta$-Phenoxyäthoxygruppe aufgeführt, als Phenalkoxygruppen seien Benzyl-, $\alpha$- oder $\beta$-Phenyläthylengruppen genannt. Aus der Reihe der Aryloxygruppen seien Phenoxy-, o- oder p-Chlorphenoxy-, 2,4-Dichlorphenoxy-, 2,5-Dichlorphenoxy-, 2,4,5-Trichlorphenoxy-, o- oder p-Methylphenoxy-, 2,4- oder 2,6-Dimethylphenoxy-, 2,4,6-Trimethylphenoxy-, p-tert. Butylphenoxy-, p-Amylphenoxy-, o-, m-, oder p-Methoxyphenoxy-, p-Phenylphenoxy-, p-Phenoxyphenoxy-, $\beta$-Naphthoxy-2 - (5,6,7,8 - Tetrahydro) - naphthoxy- oder 1 - (1,2,3,4 - Tetrahydro) - naphthoxygruppen genannt.

Ebenfalls bevorzugt sind die Dioxazine der Formel

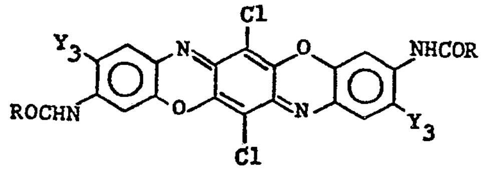

(IV)

worin die R Alkylreste mit 1—6 C-Atomen, oder gegebenenfalls durch Halogenatome, Alkyl- oder Alkoxygruppen mit 1—6 C-Atomen substituierte Phenylreste und die $Y_3$ Alkoxygruppen mit 1—6 C-Atomen bedeuten.

Als beispiele von Dioxazinen der Formel II seien die in den GB-Patentschriften No. 1 343 093 und No. 1 424 209 aufgeführten Dioxazinfarbstoffe einzeln oder in Mischungen untereinander erwähnt, und insbesondere

1,5,9,10-Tetrachlor-2,6-dimethoxy-triphendioxazin
1,5,9,10-Tetrachlor-2,6-diäthoxy-triphendioxazin
1,5,9,10-Tetrachlor-2,6-diphenoxy-triphendioxazin
2,6,9,10-Tetrachlor-3,7-diäthoxy-triphendioxazin
2,6-Diacetylamino-3,7-dimethoxy-triphendioxazin
2,6-Diacetylamino-3,7-diäthoxy-triphendioxazin
2,6-Dipropionylamino-3,7-dimethoxy-triphendioxazin
2,6-Dipropionylamino-3,7-diäthoxy-triphendioxazin
2,6-Dibenzoylamino-3,7-dimethoxy-triphendioxazin
2,6-Di-(p-chlorbenzoylamino)-3,7-diäthoxy-triphendioxazin
2,6-Di-(p-chlorbenzoylamino)-3,7-diisopropoxy-triphendioxazin
2,6-Dibenzoylamino-3,7-diäthoxy-9,10-diacetylamino-triphendioxazin
2,6,9,10-Tetrabenzoylamino-3,7-diäthoxy-triphendioxazin
2,6-Dimethoxy-9,10-diacetylamino-triphendioxazin
2,6-Diphenoxy-9,10-diacetylamino-triphendioxazin
2,6-Dimethoxy-9,10-dibenzoylamino-triphendioxazin

Die erwähnten Dioxazine stellen bekannte Verbindungen dar, die nach den üblichen Verfahren hergestellt werden können.

Neben dem Indigoid- oder Dioxazinpigment enthält das Färbemittel einen davon verschiedenen polymerlöslichen und thermostabilen Farbstoff, der den verschiedensten Klassen angehören kann, beispielsweise der Anthrachinon-, Azo-, Azomethin-, Pththalocyanin-, Perinon-, Isoindolinon-, Perylen-, Methin- oder Triazinreihe.

Als Vertreter der Anthrachinonreihe seien beispielsweise die als Dispersionsfarbstoffe und besonders als polymerlösliche Farbkörper bekannten Amino-, Alkylamino-, Cyclohexylamino-, Hydroxyalkylamino- und Phenylaminoanthrachinone erwähnt, die als weitere Auxochrome noch Hydroxygruppen oder Phenylmercaptogruppen enthalten können.

Als Beispiele seien die in den französischen Patentanmeldungen 2 081 678 und 2 081 688 erwähnten Arylamino- bzw. Aminohydroxyanthrachinone, die in der DE—OS 2 021 786 genannten 1,4 - Diphenylamino - 5,8 - dihydroxyanthrachinone, die in der US—PS 3 478 041 aufgeführten Cyclohexylamino- und Toluidinoanthrachinone, die in der DE—AS 1 128 066 erwähnten Umsetzungsprodukte aus Aminoanthrachinonen mit Monohalogenarylketonen oder die in der DE—AS 1 128 066 erwähnten Umsetzungsprodukte aus Aminoanthrachinonen mit Monohalogenarylketonen oder die in der DE—AS 1 282 933 genannten Phenylmercaptoanthrachinone oder die in der GB—PS 1 314 085 oder in der DE—OS 2 431 578 beschriebenen Anthrapyridone genannt.

Als weitere Beispiele von Anthrachinonfarbstoffen kommen auch Küpenfarbstoffe in Betracht, sofern sie im Polyester genügend löslich sind, beispielsweise Acylaminoanthrachinone, wie 1-Benzoylaminoanthrachinon, 1,5-Dibenzoylaminoanthrachinon, und 2,4 - Bis - ($\alpha$ - anthrachinonylamino) - 6 - phenyl - 1,3,5 - triazin.

Aus der Azoreihe seien die zur Massefärbung von Polyestern verwendbaren Azofarbstoffe, die durch Kuppeln diazotierter Aniline oder heterocyclischer Amine mit Dialkylanilinen, Pyrazolonen oder Pyridonen erhalten werden, genannt, wie sie beispielsweise in der GB—PS 1 326 941 erwähnt sind.

Daneben seien 1:2-Metallkomplexe, insbesondere Chrom- und Kobaltkomplexe von o,o-Dihydroxymonoazofarbstoffen erwähnt, wie sie beispielsweise in der CH—PS 508 005 genannt sind.

Aus der Reihe der Azomethinfarbstoffe seien insbesondere die Aldimine aus Salicylaldehyden oder 2 - Hydroxy - 1 - naphthaldehyd mit Mono- oder Diaminobenzolen sowie deren Metallkomplexe genannt.

Als Beispiele von polymerlöslichen Phthalocyaninen seien die Alkyl- oder Alkoxyalkylamide der Cu-Phthalocyanin-tri- oder tetrasulfonsäure erwähnt.

Als Vertreter von Methinfarbstoffen seien die Methylen-bis-pyrazolone, wie sie beispielsweise in der US—PS 3 785 769 beschrieben sind, oder die durch die GB—PS 1 403 510 aufgeführten Kondensationsprodukte aus Cyan - methyl - benzimidazolonen und Isoindolinonen, oder die durch viele Patentschriften bekannt gewordenen Kondensationsprodukte aus Malonitril und Dialkylaminobenzaldehyd sowie die in der US—PS 4 051 099 beschriebenen Verbindungen, insbesondere jene der Formel

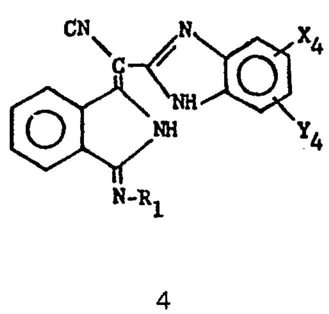

worin $R_1$ einen gegebenenfalls substituierten Phenylrest, $X_4$ und $Y_4$ H- oder Halogenatome, Alkyl- oder Alkoxygruppen sind, mit 1—4 C-Atomen bedeuten.

Als Vertreter der Perylenreihe seien beispielsweise die als polymerlöslich bekannten Perylen - 3,4,9,10 - tetracarbonsäure - bis - arylimide, wie das Bis - 2,4,6 - trimethylphenylimid -, Bis - n - laurylimid-, Bis - 3 - methoxy - n - propylimid - und das Bis - 4 - [N - propylsulfonamid] - phenylimid erwahnt.

Schliesslich sei als Beispiel eines Triazinfarbstoffes das 2,4 - Di - (2' - hydroxynaphthyl) - 6 - pyrenyl - 1,3,5 - triazin erwähnt.

Das Verhältnis von polymerlöslichen Farbstoff zu Polyester kann je nach der gewünschten Farbstärke innerhalb weiter Grenzen schwanken. Im allgemeinen empfiehlt sich die Verwendung von 0,005—2,5 Gew.-% Farbstoff bezogen auf den Polyester.

In jedem Falle müssen sowohl die Thioindigo- und/oder Dioxazinderivate als auch der oder die mitverwendeten Farbkörper im Polymeren vollständig gelöst sein.

Die Thioindigo- oder Dioxazinderivate können vor oder während des Färbevorganges mit dem polymerlöslichen Farbstoff vermischt werden. Findet die Mischung vor dem Färbevorgang statt, so kann sie unter Zugabe eines Trägerstoffes erfolgen.

Als lineare Polyester seien insbesondere jene erwähnt, die durch Polykondensation von Terephthalsäure oder deren Estern mit Glykolen der Formel $HO—(CH_2)_n—OH$, worin n die Zahl 2—10 bedeutet, oder mit 1,4 - Di(hydroxymethyl) - cyclohexan oder durch Polykondensation von Glykoläthern von Hydroxybenzoesäuren, beispielsweise p - ($\beta$ - Hydroxyäthoxy) - benzoesäure erhalten werden. Der Begriff lineare Polyester umfasst auch Kopolyester, die durch teilweisen Ersatz der Terephthalsäure durch eine andere Dicarbonsäure oder durch Einkondensation einer Hydroxycarbonsäure und/oder durch teilweisen Ersatz des Glykols durch ein anderes Diol erhalten werden.

Von besonderem Interesse sind jedoch die Polyäthylenterephthalate.

Die zu färbenden linearen Polyester werden zweckmässig in Form von Pulver, Schnitzeln oder Granulaten mit den Farbstoffen innig vermischt. Dies kann beispielsweise durch Beschichten der Polyesterteilchen mit dem fein verteilten trockenen Farbstoffpulver oder durch Behandeln der Polyesterteilchen mit einer Lösung bzw. Dispersion der Farbstoffe in Wasser oder einem organischen Lösungsmittel und nachheriger Entfernung des Lösungsmittels gescheben. Die so behandelten Polyesterteilchen werden nach bekannten Verfahren im Extruder geschmolzen und zu Gegenständen, insbesondere Folien oder Fasern ausgepresst oder zu Platten gegossen. Anstelle der reinen Farbstoffe kann man vorteilhaft Präparate verwenden, welche neben dem Farbstoff 5—80%, vorzugsweise 20—80% eines Trägerstoffes, beispielsweise ein Polyëthylenterephthalat wie es zur Faserherstellung verwendet wird, oder einen Polyester mit niederem Erweichungspunkt, oder ein Polyäthylen, oder ein Polystyrol, vorzugsweise mit einem Erweichungspunkt über 100°C, verwenden.

Schliesslich kann das Färbemittel auch direkt dem geschmolzenen Polyester zugegeben werden, z.B. nach dem Injektionsverfahren.

Die erfindungsgemäss spinngefärbten Fasern können mit Dispersionsfarbstoffen auf übliche Art überfärbt werden.

Da die Thioindigo- wie auch die Dioxazinderivate beim Einfärben in Polyestern in Konzentrationen von über 0,35 Gew.-% bezogen auf den Polyester wohl gute Lichtaber oft schlechte textile Echtheiten, beim Einfärben in Konzentrationen von unter 0,05 Gew.-% bezogen auf den Polyester wohl gute textile aber oft schlechte Lichtechtheiten aufweisen, ist es überraschend, dass bei den im erfindungsgemäss verwendeten Konzentrationsbereich von 0,05—0,35 Gew.-% bezogen auf den Polyester an Thioindigo- oder Dioxazinderivaten die Lichtechtheiten wie auch die textilen Echtheiten und Eigenschaften der erfindungsgemäss gefärbten Fasern gut bis sehr gut sind.

Weiter ist überraschend, dass man mit den erfindungsgemäss verwendeten Konzentrationen von 0,05—0,35 Gew.-% bezogen auf den Polyester an Thioindigo- oder Dioxazinderivaten in Mischungen mit polymerlöslichen Farbkörpern beim erfindungsgemässen Einfärben in Polyäthylenterephthalat optimale Nuanciereffekte erzielen kann. Die Färbungen zeichnen sich durch hohe Intensität, Brillanz, Reinheit und Gleichmässigkeit aus.

Die GB—PS 651.694 lehrt die Massenfärbung von Polyestern mit Farbstoffen, insbesondere der Anthrachinonreihe. Als weitere Farbstoffe werden Küpenfarbstoffe wie Thioindigo, sowie Chromkomplexe von Azofarbstoffen erwähnt. Es wird auch erwähnt, dass Mischungen verschiedener Farbstoffe verwendet werden können. Nur im Beispiel 3 wird eine Mischung, nämlich eine solche aus 3 verschiedenen Anthrachinonfarbstoffen erwähnt. Die erfindungsgemässe Mischung aus einem Thioindigo- oder Dioxazinpigment und einem polymerlöslichen Farbstoff wird nicht genannt; während die Mischung des Beispiels 3 nur trübe Oliv-Nuancen ergibt, erhält man mit den erfindungsgemässen Mischungen brillante Nuancen.

Die US—PS 3.009.913 beschreibt Mischungen von Dioxazinpigmenten mit Phthalocyaninpigmenten zum Färben thermoplastischer Massen. Mit solchen Mischungen erhält man jedoch nur trübe schieferfarbene Färbungen. Im Gegensatz dazu ergeben die erfindungsgemässen Mischungen aus einem Dioxazinpigment und einem polymerlöslichen Phthalocyanin äusserst brillante und farbstarke rotstichig blaue Färbungen. Dies ist umso mehr überraschend als das polymerlösliche CuPc, welches den Hauptteil der Mischung ausmacht, eine stark grünstichig blaue Färbung ergibt.

In den nachfolgenden Beispielen bedeuten die Teile, sofern nichts anderes angegeben wird, Gewichtsteile, die Prozente Gewichtsprozente.

Beispiel 1

1000 Teile Polyäthylenterephthalatgranulat, 10 Teile Kupferphthalocyanintetrasulfonsäure - (3 - isopropoxypropyl) - amid sowie 2 Teile 1,5,9,10 - Tetrachlor - 2,6 - dimethoxy - triphendioxazin werden in einer Mischtrommel intensiv vermischt und danach während ca. 24 Stunden bei 100°C am Vakuum bei 19.99 mbar (15 mm Hg) getrocknet. Das so behandelte Granulat wird bei ca. 290°C nach dem Schmelzspinnverfahren versponnen. Man erhält blau gefärbte Fasern, welche eine wesentlich höhere Brillanz und intensivere blauere Färbung unter Beibehaltung der guten Lichtechtheit und der textilen Eigenschaften gegenüber in gleicher Konzentration mit dem Phthalocyaninfarbstoff allein gefärbten Fasern aufweisen.

Beispiel 2

In einem Turbulamischer werden 100 Teile Kupferphthalocyanin - tetrasulfonsäure - (3 - methoxypropyl) - amid mit 20 Teilen 4,4',7,7' - Tetrachlorthioindigo während ca. 15 Minuten gut vermischt. 10 Teile dieser Farbstoffmischung werden in 1000 Teilen Polyäthylenterephthalat (Diolen glänzend) während ca. 15 Minuten in einer Mischtrommel intensiv vermischt und danach während ca. 24 Stunden bei 100°C am Vakuum bei 19.99 mbar (15 mm Hg) getrocknet. Das so behandelte Granulat wird bei ca. 290°C nach dem Schmelzspinnverfahren versponnen.

Man erhält blau gefärbte Fasern, welche eine wesentlich höhere Brillanz, Farbstärke und Reinheit unter Beibehaltung der guten Licht- und textilen Eigenschaften gegenüber der in der gleichen Konzentration ohne Tetrachlorthioindigo gefärbten Fasern aufweisen.

Beispiele 3—30

Verfährt man in analoger Weise wie in Beispiel 1 beschrieben, verwendet jedoch die in der Kolonne 3 der untenstehenden Tabelle aufgeführten Dioxazin- oder Thioindigo-Farbstoffe als Nuancierkomponente im Gemisch mit dem in Kolonne 5 angegebenen polymerlöslichen Farbkörper, so erhält man gefärbte Polyesterfasern mit der in Kolonne 6 angegebenen Nuance und mit ebenso guten Eigenschaften.

| Bsp. | Teile | Nuancierkomponente | Teile | polymerlösliche Farbkörper | Nuance |
|---|---|---|---|---|---|
| 3 | 2 | 9,10-Dichlor-2,6-diäthoxy-3,7-dibenzoylamino-triphendioxazin | 10 | [CuPc]-[$SO_2HN(CH_2)_3OCH(CH_3)_2]_4$ | brillantes, farbstarkes Blau |
| 4 | 2 | 9,10-Dichlor-2,6-dimethoxy-3,7-dipropionylamino-Triphendioxazin | 10 | ,, | ,, |
| 5 | 2 | 4,4',7,7'-Tetrachlorthio-indigo | 10 | ,, | brillantes Blau |
| 6 | 2 | 4,4'-Dimethyl-6,6'-dichlor-thioindigo | 10 | ,, | ,, |
| 7 | 2 | 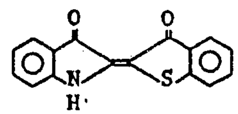 | 10 | ,, | ,, |
| 8 | 2 | 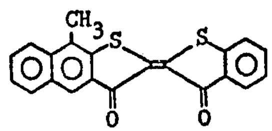 | 10 | ,, | brillantes, farbstarkes Blau |
| 9 | 2 | 6,6'-Diäthoxythioindigo | 10 | ,, | Dunkelblau |
| 10 | 2 | 6,6'-Dichlorthioindigo | 10 | ,, | brillantes Blau |
| 11 | 2 | 5,5'-Dichlor-4,4',7,7'-tetramethyl-thioindigo | 10 | ,, | brillantes Blau |

| Bsp. | Teile | Nuancierkomponente | Teile | polymerlösliche Farbkörper | Nuance |
|---|---|---|---|---|---|
| 12 | 2 | 5,5′-Dichlor-7,7′-dimethyl-thioindigo | 10 | [CuPc]-[$SO_2HN(CH_2)_3OCH(CH_3)_2]_4$ | brillantes Blau |
| 13 | 2 | 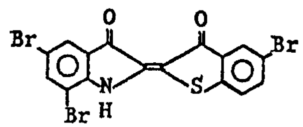 | 10 | ,, | ,, |
| 14 | 2 | 1,5,9,10-Tetrachlor-2,6-di-methoxy-triphendioxazin | 10 | 2,5-Bis-(α-anthrachinonyl-amino)-4-phenyl-1,3,5-triazin | brillantes Orange |
| 15 | 2 | 4,4′,7,7′-Tetrachlorthio-indigo | 10 | ,, | brillantes farbstarkes Orange |
| 16 | 1 | 4,4′-Dimethyl-6,6′-dichlor-thioindigo | 10 | ,, | brillantes Orange |
| 17 | 2 | 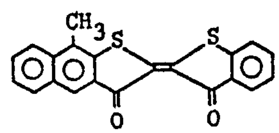 | 10 | ,, | brillantes Rotbraun |
| 18 | 2 | 5,6′-Diäthoxy-thioindigo | 10 | ,, | brillantes Orange |
| 19 | 2 | 6,6′-Dichlorthioindigo | 10 | ,, | brillantes, farbstarkes Orange |
| 20 | 2 | 5,5′-Dichlor-4,4′,7,7′-tetramethylthioindigo | 10 | ,, | brillantes Braunrot |

| Bsp. | Teile | Nuanciernkomponente | Teile | polymerlösliche Farbkörper | Nuance |
|---|---|---|---|---|---|
| 21 | 2 | 5,5′-Dichlor-7,7′-dimethyl-thioindigo | 10 | 2,5-Bis-(α-anthrachinonyl-amino)-4-phenyl-1,3,5-triazin | brillantes Braunrot |
| 22 | 1 | 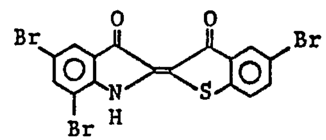 | 10 | ,, | bronzierendes Olive |
| 23 | 2 | 9,10-Dichlor-2,6-diäthoxy-3,7-dibenzoylamino-triphendioxazin | 10 | 2,4-Di-(2′-hydroxynaphthyl)-6-pyrenyl-1,3,5-triazin | farbstarkes Braun |
| 24 | 1 | 4,4′,7,7′-Tetrachlorthioindigo | 10 | ,, | brillantes Orange |
| 25 | 1 | 9,10-Dichlor-2,6-diäthoxy-3,7-dibenzoylamino-triphendioxazin | 10 | 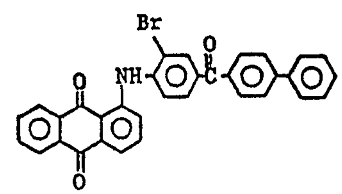 | rotstichiges Bordeaux |
| 26 | 2 | ,, | 10 | 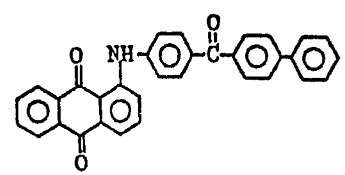 | blaustichiges Bordeaux |

| Bsp. | Teile | Nuancierkomponente | Teile | polymerlösliche Farbkörper | Nuance |
|---|---|---|---|---|---|
| 27 | 2 | 9,10-Dichlor-2,6-dimethoxy-3,7-dipropionyl-amino-triphendioxazin | 5 | 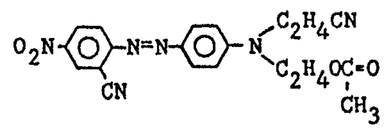 | blaustichiges Bordeaux |
| 28 | 2 | " | 5 | 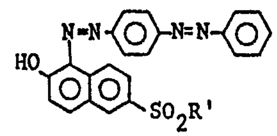<br>R' = 50% 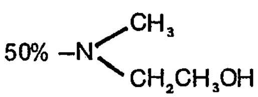<br>50% 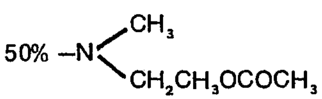 | blaustichiges Bordeaux |
| 29 | 2 | 1,5,9,10-Tetrachlor-2,6-dimethoxy-triphendioxazin | 10 | 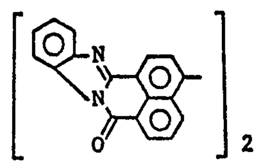 | brillantes farbstarkes Orange |
| 30 | 2 | 9,10-Dichlor-2,6-diäthoxy-3,7-dibenzoylamino-triphendioxazin | 10 | " | bronzierendes Braun |

| Bsp. | Teile | Nuancierkomponente | Teile | polymerlösliche Farbkörper | Nuance |
|---|---|---|---|---|---|
| 31 | 2 | 9,10-Dichloro-2,6-di-p-methoxy-phenoxy-triphendioxazin | 10 | $[CuPc]-[SO_2HN(CH_2)_3OCH(CH_3)_2]_4$ | Marineblau |
| 32 | 1 | 2,6-Diamino-3,7,9,10-tetra-chlor-triphendioxazin | 10 | $[CuPc]-[SO_2HN(CH_2)_3OCH(CH_3)_2]_4$ | Blau |
| 33 | 1 | 2,6-Dipropoxy-9,10-dibenzoyl-triphendioxazin | 10 | $[CuPc]-[SO_2HN(CH_2)_3OCH(CH_3)_2]_4$ | Blau |
| 34 | 2 | 2,6-Dipropoxy-9,10-dichlor-triphendioxazin | 10 | $[CuPc]-[SO_2HN(CH_2)_3OCH(CH_3)_2]_4$ | Marinebleau |
| 35 | 2 | 2,6-Di-β-methoxyäthoxy-triphendioxazin | 10 | $[CuPc]-[SO_2HN(CH_2)_3OCH(CH_3)_2]_4$ | Marineblau |
| 36 | 2 | 1,5-Dichlor-2,6-dimethoxy-9,10-dibenzoyl-triphendio-xazin | 10 | 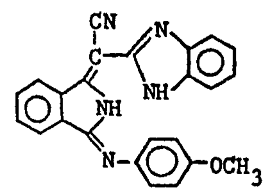 | Orange |
| 37 | 2 | 2,6-Diamino-3,7,9,10-tetra-chlor-triphendioxazin | 10 | 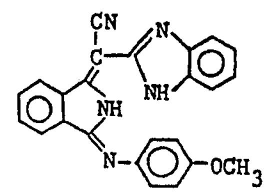 | Dunkelbraun |

**Patentansprüche**

1. Verfahren zum Färben linearer Polyester in der Masse, dadurch gekennzeichnet, dass man als Färbemittel eine Mischung verwendet, bestehend aus 0,05—0,35 Gew.-% bezogen auf die Polyestermenge eines Thioindigo- und/oder Dioxazinpigmentes und einem oder mehreren davon verschiedenen polymerlöslichen Farbstoffen.

2. Verfahren gemäss Anspruch 1, dadurch gekennzeichnet, dass man ein Pigment der Formel

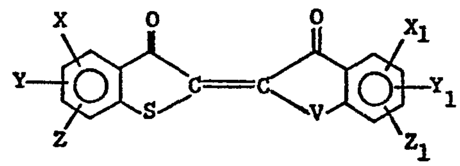

verwendet, worin V ein S-Atom oder eine —NH-Gruppe, X und $X_1$ H- oder Halogenatome, Alkyl- oder Alkoxygruppen mit 1—4 C-Atomen, Alkylsulfonylgruppen mit 1—4 C-Atomen oder eine gegebenenfalls durch Halogenatome, Alkyl- oder Alkoxygruppen mit 1—4 C-Atomen substituierte Phenoxy- oder Phenylsulfonylgruppe, Y, $Y_1$, Z und $Z_1$ H- oder Halogenatome oder Methylgruppen bedeuten, oder worin X und Y bzw. $X_1$ und $Y_1$ zusammen einen ankondensierten Benzolkern bilden, der gegebenenfalls durch Halogenatome, Alkyl- oder Alkoxygruppen mit 1—4 C-Atomen substituiert sein kann.

3. Verfahren gemäss Anspruch 1, dadurch gekennzeichnet dass man 4,4',7,7'-Tetrachlorthioindigo verwendet.

4. Verfahren gemäss Anspruch 1, dadurch gekennzeichnet, dass man asymmetrische Thioindigopigmente verwendet.

5. Verfahren gemäss Anspruch 1, dadurch gekennzeichnet, dass man ein Dioxazin der Formel

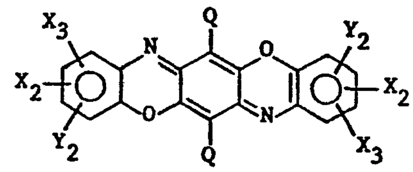

verwendet, worin die Q Chlor- oder Bromatome, gegebenenfalls durch Halogenatome, Alkyl- oder Alkoxygruppen mit 1—4 C-Atomen substituierte Phenoxy-, Phenylmercapto- oder Benzoylgruppen oder Alkoxycarbonylgruppen mit 2—5 C-Atomen, die $Y_2$ Alkoxygruppen mit 1—12 C-Atomen, Cycloalkoxygruppen mit 5 oder 6 C-Atomen, Hydroxyalkoxygruppen mit 2—6 C-Atomen, Alkoxyalkoxy- oder Alkanoyloxyalkoxygruppen mit 3—8 C-Atomen, Phenoxygruppen, Phenoxy - ($C_2$—$C_6$) - alkoxy - oder Benzoyloxy - ($C_2$—$C_6$) - alkoxygruppen, wobei die drei letztgenannten in den Phenylresten Halogenatome, Alkyl- oder Alkoxygruppen aufweisen können, Naphthoxy- oder Tetrahydronaphthoxygruppen, Naphthoxy - ($C_2$—$C_6$) - alkoxy - oder Tetrahydronaphthoxy - ($C_2$—$C_6$) - alkoxygruppen bedeuten, die $X_2$ die Bedeutung von $Y_2$ haben und zusätzlich noch H- oder Halogenatome, Alkanoylaminogruppen mit 2—6 C-Atomen, gegebenenfalls durch Halogenatome, Alkyl- oder Alkoxygruppen mit 1—6 C-Atomen substituierte Benzoylaminogruppen, Trifluormethylgruppen, Alkylsulfonylgruppen mit 1—6 C-Atomen, Phenyl-, Benzoyl- oder Phenylmercaptogruppen darstellen können, die $X_3$ H- oder Halogenatome bedeuten, oder worin die Reste $X_2$ und $X_3$ zusammen einen ankondensierten Benzolring bilden.

6. Verfahren gemäss Anspruch 1, dadurch gekennzeichnet, dass man Dioxazine der Formel

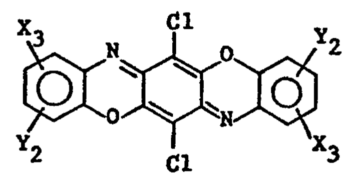

verwendet, worin $X_3$ und $Y_2$ die im Anspruch 5 angegebene Bedeutung haben.

7. Verfahren gemäss Anspruch 1, dadurch gekennzeichnet, dass man Dioxazine der Formel

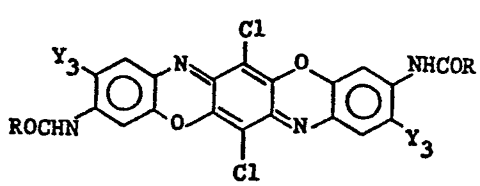

verwendet, worin die R Alkylreste mit 1—6 C-Atomen, oder gegebenenfalls durch Halogenatome, Alkyl- oder Alkoxygruppen mit 1—6 C-Atomen substituierte Phenylreste und die $Y_3$ Alkoxygruppen mit 1—6 C-Atomen bedeuten.

8. Verfahren gemäss den Ansprüchen 1—3, dadurch gekennzeichnet, dass man 0,10—0,25 Gew.-% des Thioindigo und/oder Dioxazinpigmentes verwendet.

## Claims

1. A process for the mass colouration of linear polyesters, characterised in that there is used, as colourant, a mixture consisting of 0.05 to 0.35% by weight, based on the amount of polyester, of a thioindigo and/or dioxazine pigment and one or more polymer-soluble dyes which are different therefrom.

2. A process according to claim 1, characterised by the use of a pigment of the formula

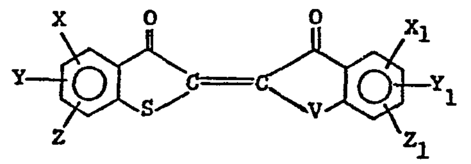

wherein V represents a sulfur atom or a —NH group, X and $X_1$ are hydrogen or halogen atoms, alkyl or alkoxy groups of 1 to 4 carbon atoms, alkylsulfonyl groups of 1 to 4 carbon atoms or a phenoxy or phenylsulfonyl group which is unsubstituted or substituted by halogen atoms or alkyl or alkoxy groups of 1 to 4 carbon atoms, Y, $Y_1$, Z and $Z_1$ are hydrogen or halogen atoms or methyl groups, or wherein X and Y or $X_1$ and $Y_1$ form a fused benzene nucleus which can be substituted by halogen atoms or alkyl or alkoxy groups of 1 to 4 carbon atoms.

3. A process according to claim 1, characterised by the use of 4,4′,7,7′-tetrachlorothioindigo.

4. A process according to claim 1, characterised by the use of asymmetrical thioindigo pigments.

5. A process according to claim 1, characterised by the use of a dioxazine of the formula

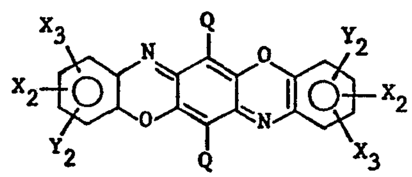

wherein Q is a chlorine or bromine atom, a phenoxy, phenylmercapto or benzoyl group which is unsubstituted or substituted by halogen or alkyl or alkoxy of 1 to 4 carbon atoms, or is an alkoxycarbonyl group of 2 to 5 carbon atoms, $Y_2$ is an alkoxy group of 1 to 12 carbon atoms, a cycloalkoxy group of 5 or 6 carbon atoms, a hydroxyalkoxy group of 2 to 6 carbon atoms, an alkoxyalkoxy or alkanoyloxyalkoxy group of 3 to 8 carbon atoms, a phenoxy group, a phenoxy($C_2$—$C_6$)alkoxy group or benzoyloxy($C_2$—$C_6$)alkoxy group, whilst the phenyl moieties of the last three substituents can contain halogen atoms or alkyl or alkoxy groups, or is a naphthoxy- or tetrahydronaphthoxy group, or a naphthoic($C_2$—$C_6$)alkoxy group or a tetrahydronaphthoxy($C_2$—$C_6$)-alkoxy group, $X_2$ has the same meaning as $Y_2$ and can additionally be a hydrogen or halogen atom, an alkanoylamino group of 2 to 6 carbon atoms, a benzoylamino group which is unsubstituted or substituted by halogen or alkyl or alkoxy of 1 to 6 carbon atoms, or is a trifluoromethyl group, an alkylsulfonyl group of 1 to 6 carbon atoms, a phenyl, benzoyl or phenylmercapto group, $X_3$ is a hydrogen or halogen atom, or wherein $X_2$ and $X_3$ together form a fused benzene ring.

6. A process according to claim 1, characterised by the use of a dioxazine of the formula

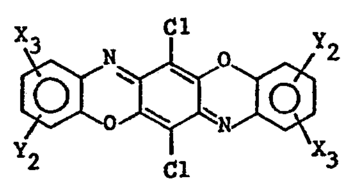

wherein $X_3$ and $Y_2$ are as defined in claim 4.

7. A process according to claim 1, characterised by the use of a dioxazine of the formula

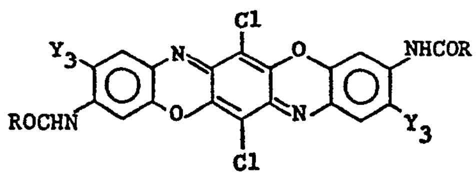

wherein R is an alkyl group of 1 to 6 carbon atoms or a phenyl radical which is unsubstituted or substituted by halogen or alkyl or alkoxy of 1 to 6 carbon atoms, and $Y_3$ is an alkoxy group of 1 to 6 carbon atoms.

8. A process according to claims 1 to 3, characterised by the use of 0.10 to 0.25% by weight of the thioindigo and/or dioxazine pigment.

**Revendications**

1. Procédé pour teindre des polyesters linéaires dans la masse, procédé caractérisé en ce qu'on utilise, comme matière colorante, un mélange constitué de 0,05 à 0,35% en poids, par rapport à la quantité de polyester, d'un pigment thio-indigooïde et/ou d'un pigment dioxazinique et d'un ou plusieurs colorants différents des précédents et solubles dans les polymères.

2. Procédé selon la revendication 1, caractérisé en ce qu'on utilise un pigment répondant à la formule

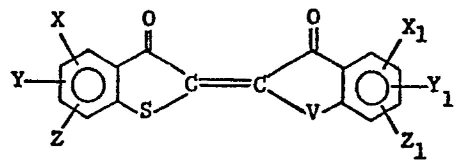

dans laquelle V représente un atome S ou un groupe —NH—, X et $X_1$ représentent des atomes d'hydrogène ou d'halogènes, des radicaux alkyles ou alkoxy en $C_1$—$C_4$, des radicaux alkylsulfonyles en $C_1$—$C_4$ ou un radical phénoxy ou phénylsulfonyle éventuellement porteur d'atomes d'halogènes ou de radicaux alkyles ou alcoxy en $C_1$—$C_4$, Y, $Y_1$, Z et $Z_1$ représentent des atomes d'hydrogène ou d'halogènes ou des radicaux méthyles, ou dans laquelle le couple (X, Y) et/ou le couple ($X_1$, $Y_1$) forment un noyau benzénique condensé, qui peut porter des substituants, par exemple des atomes d'halogènes ou des radicaux alkyles ou alcoxy en $C_1$—$C_4$.

3. Procédé selon la revendication 1, caractérisé en ce qu'on utilise le tétrachloro-4,4',7,7' thioindigo.

4. Procédé selon la revendication 1, caractérisé en ce qu'on utilise des pigments thio-indigoïdes asymétriques.

5. Procédé selon la revendication 1, caractérisé en ce qu'on utilise une dioxazine répondant à la formule

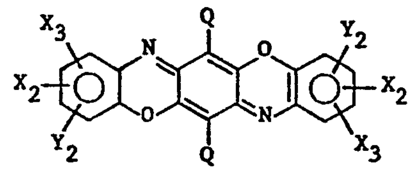

dans laquelle les symboles Q représentent des atomes de chlore ou de brome, des radicaux phénoxy, phénylthio ou benzoyles éventuellement porteurs d'halogènes ou de radicaus alkyles ou alcoxy en $C_1$—$C_4$, ou des radicaux alcoxycarbonyles en $C_2$—$C_5$, les $Y_2$ représentent des radicaux alcoxy en $C_1$—$C_{12}$, des radicaux cycloalcoxy en $C_5$ ou $C_6$, des radicaux hydroxyalcoxy en $C_2$—$C_6$, des radicaux alcoxyalcoxy ou alcanoyloxy-alcoxy en $C_3$—$C_8$, des radicaux phénoxy, des radicaux phénoxy-($C_2$—$C_6$)alcoxy ou des radicaux benzoyloxy-($C_2$—$C_6$)alcoxy, les trois derniers citées pouvant porter, sur les radicaux phényles, des atomes d'halogènes ou des radicaux alkyles ou alcoxy, des radicaux naphtoxy ou tétrahydronaphtoxy, des radicaux naphtoxy-($C_2$—$C_6$)alcoxy ou tétrahydronaphtoxy-($C_2$—$C_6$)alcoxy, les $X_2$ ont les significations de $Y_2$ et peuvent en outre représenter des atomes d'hydrogène ou d'halogènes, des radicaux alcanoylamino en $C_2$—$C_6$, des radicaux benzoylamino éventuellement porteurs d'atomes d'halogènes ou de radicaux alkyles ou alcoxy en $C_1$—$C_6$, des radicaux trifluorométhyles, des radicaux alkylsulfonyles en $C_1$—$C_6$ ou des radicaux phényles, benzoyles ou phénylthio, les $X_3$ représentent des atomes d'hydrogène ou d'halogènes, ou $X_2$ et $X_3$ forment ensemble un noyau benzénique condensé.

6. Procédé selon la revendication 1, caractérisé en ce qu'on utilise des dioxazines répondant à la formule

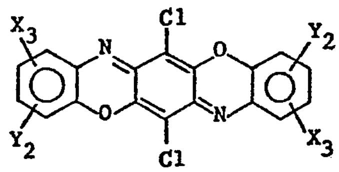

dans laquelle $X_3$ et $Y_2$ ont les significations données à la revendication 4.

7. Procédé selon la revendication 1, caractérisé en ce qu'on utilise des dioxazines répondant à la formule

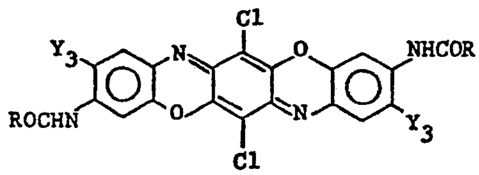

dans laquelle les R représentent des radicaux alkyles contenant de 1 à 6 atomes de carbone ou représentent des radicaux phényles éventuellement porteurs d'atomes d'halogènes ou de radicaux alkyles ou alcoxy contenant de 1 à 6 atomes de carbone, et les $Y_3$ représentent des radicaux alcoxy contenant de 1 à 6 atomes de carbone.

8. Procédé selon l'une quelconque des revendications 1 à 3, caractérisé en ce qu'on utilise de 0,10 à 0,25% en poids du pigment thio-indigoïde et/ou dioxazinique.